# FASCICULE DE BREVET EUROPEEN

(11) **EP 2 887 826 B1**
(45) Date de publication et mention de la délivrance du brevet: **12.10.2016**
(21) Numéro de dépôt: 13762175.1
(22) Date de dépôt: 20.08.2013
(51) Int. Cl.: A23L 13/00, A22C 7/00, A22C 18/00

(54) **INSTALLATION PERFECTIONNÉE DE FABRICATION D'UN ÉLÉMENT DE VIANDE RESTRUCTURÉE**
VERBESSERTE ANLAGE ZUR HERSTELLUNG EINES ELEMENTS AUS RESTRUKTURIERTEM FLEISCH
IMPROVED FACILITY FOR MANUFACTURING A RESTRUCTURED MEAT ELEMENT

(30) Priorité: 24.08.2012 FR 1257983
(43) Date de publication de la demande: 01.07.2015
(73) Titulaire: Convival, 03300 Creuzier Le Vieux (FR)
(72) Inventeur: MEUNIER, Jean, F-03700 Bellerive (FR)
(74) Mandataire: de la Bigne, Guillaume Michel Marie
(86) Numéro de dépôt international: PCT/FR2013/051951
(87) Numéro de publication internationale: WO 2014/029946

(56) Documents cités:
- WO-A1-2007/085773
- WO-A1-2010/006893
- JP-A- 2001 038 681
- US-A- 4 460 611
- US-A1- 2004 155 129

## Description

La présente invention concerne le domaine technique de la fabrication d'un élément de viande restructurée.

On connaît déjà dans l'état de la technique, notamment d'après WO 2007/085773, une installation de fabrication d'un élément de viande restructurée, du type comprenant :
- des moyens de formation de fragments de viande, et
- un support mobile des fragments de viande destiné à convoyer ces fragments de viande suivant une direction longitudinale, à travers des moyens de tassement cohésif des fragments de viande pour former un bloc de fragments de viande tassés.

On souhaite généralement qu'un morceau de viande restructurée conserve autant que possible, à l'égard de sa mastication par un consommateur, des propriétés similaires à celles d'un morceau de viande non déstructurée.

Ceci est obtenu notamment en préservant au mieux la structure des lipocytes et des myofibrilles de la viande dont le diamètre est généralement inférieur à 50 micromètres.

Les moyens de formation de fragments de viande proposés dans WO 2007/085773 permettent de préserver de façon relativement satisfaisante la structure des lipocytes et des myofibrilles, en formant des fragments de viande tels que chaque fragment ait une forme générale de feuille ayant une surface comprise entre 5 à 10 cm² et une épaisseur comprise entre 3 et 9 dixièmes de mm.

Les moyens de tassement cohésif des fragments de viande proposés dans WO 2007/085773 comprennent deux tapis roulants de tassement cohésif des fragments de viande. Les deux tapis de tassement sont disposés l'un au-dessus de l'autre de façon que le tapis inférieur s'étende sensiblement horizontalement et le tapis supérieur soit incliné par rapport au tapis inférieur. Les deux tapis roulants de tassement convergent d'amont en aval par rapport au sens de passage des fragments de viande entre ces tapis de façon à provoquer un tassement cohésif des fragments de viande.

Les moyens de tassement cohésif des fragments de viande proposés dans WO 2007/085773 sont généralement efficaces. Toutefois, on souhaite optimiser davantage leur efficacité.

L'invention a notamment pour but d'optimiser le fonctionnement des moyens de tassement cohésif des fragments de viande.

À cet effet, l'invention a pour objet une installation de fabrication d'un élément de viande restructurée, du type comprenant :
- des moyens de formation de fragments de viande, et
- un support mobile des fragments de viande destiné à convoyer ces fragments de viande suivant une direction longitudinale, à travers des moyens de tassement cohésif des fragments de viande pour former un bloc de fragments de viande tassés,
caractérisée en ce que les moyens de tassement cohésif comprennent :
- deux sabots mobiles de tassement des fragments de viande entre le support mobile et ces sabots, les sabots étant décalés l'un par rapport à l'autre transversalement par rapport à la direction longitudinale de convoyage, et
- des moyens d'entraînement des sabots chacun suivant un mouvement alternatif vertical tel que les sabots se déplacent en déphasage l'un par rapport à l'autre.

Dans ce qui précède et ce qui suit la direction verticale est celle définie par la gravité.

On observe que les moyens de tassement cohésif munis des deux sabots définis ci-dessus sont relativement efficaces du fait que les sabots agissent sur des zones décalées transversalement du bloc de fragments de viande tassés en cours de formation, ceci en déphasage l'un par rapport à l'autre.

Les mouvements alternatifs verticaux déphasés des deux sabots transmettent au bloc de fragments de viande tassés en cours de formation des efforts de tassement convenablement répartis.

Suivant d'autres caractéristiques optionnelles de l'invention :
- chaque sabot a une surface de contact avec les fragments de viande conformée de façon à exercer un tassement dans le sens d'une réduction des dimensions transversales du bloc de fragments de viande tassés en cours de formation ;
- la surface de contact avec les fragments de viande est sensiblement curviligne autour d'un axe parallèle à la direction longitudinale de convoyage ;
- les sabots sont alignés transversalement à la direction longitudinale de convoyage;
- les moyens de déplacement alternatif vertical des sabots comprennent des moyens à vérin fluidique, par exemple deux vérins reliés respectivement aux deux sabots de tassement ;
- les moyens de tassement cohésif comprennent des moyens de nivellement du bloc de fragments de viande tassés en cours de formation disposés en amont des sabots de tassement par rapport à un sens de passage des fragments de viande à travers les moyens de tassement cohésif des fragments de viande, ces moyens de nivellement comprenant un organe de nivellement, destiné à coopérer avec le dessus du bloc de fragments de viande tassés en cours de formation, et des moyens d'entraînement de l'organe de nivellement suivant un mouvement basculant oscillant ;
- l'organe de nivellement à une forme générale de râteau muni de dents comportant des extrémités libres destinées à coopérer avec le dessus du bloc de fragments de viande tassés en cours de formation ;
- les moyens d'entraînement de l'organe de nivellement comprennent un moteur d'entraînement en rotation et des moyens de transformation du mouvement de rotation du moteur en mouvement de basculement de l'organe de nivellement, ces moyens de transformation de mouvement comportant une manivelle munie d'une première extrémité reliée à un arbre de rotation du moteur d'entraînement et d'une seconde extrémité reliée à un maneton destiné à coulisser dans un rail rectiligne solidaire d'un arbre de basculement de l'organe de nivellement ;
- le support mobile de fragments de viande comprend un tapis roulant ;
- les moyens de tassement cohésif comprennent deux tapis roulants de tassement cohésif des fragments de viande convergeant d'amont en aval par rapport au sens de passage des fragments de viande à travers les moyens de tassement cohésif des fragments de viande, les deux tapis de tassement étant disposés l'un au-dessus de l'autre, le tapis de tassement inférieur étant formé par le support mobile de fragments de viande.

L'invention sera mieux comprise à la lecture de la description qui va suivre donnée uniquement à titre d'exemple est faite en se référant aux dessins dans lesquels :
- la figure 1 est une vue en perspective d'une installation de fabrication d'un élément de viande restructurée selon l'invention ;
- la figure 2 est une vue de détail en perspective, selon le point de vue de la flèche II de la figure 1, montrant les sabots mobiles des moyens de tassement cohésif de l'installation de la figure 1 ;
- la figure 3 est une vue en perspective d'un vérin hydraulique des moyens de déplacement d'un des sabots ;
- la figure 4 est une vue de détail en perspective, selon le point de vue de la flèche IV de la figure 1, montrant l'organe de nivellement de l'installation de la figure 1.

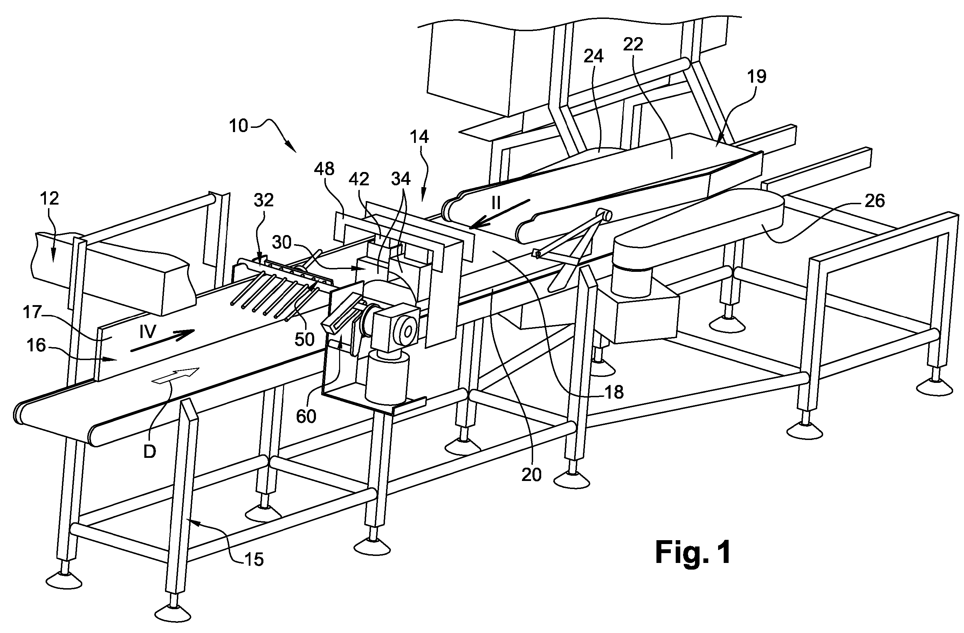

On a représenté sur la figure 1 une installation de fabrication d'un élément de viande restructurée, selon l'invention, désignée par la référence générale 10.

Cette installation 10 comprend divers moyens, qui seront décrits par la suite, matérialisant un trajet de circulation de la viande depuis une extrémité amont où sont produits les fragments de viande déstructurée jusqu'à une extrémité aval où sont recueillis les éléments de viande restructurée. Le sens gauche-droite de la figure 1 correspond au sens amont-aval de circulation de la viande.

Les éléments de viande restructurée ont par exemple une forme générale cylindrique. Bien entendu, la base de la forme générale cylindrique n'est pas nécessairement circulaire et peut être notamment ovoïde. Les éléments de viande restructurée, qui ne sont pas illustrés sur les figures, sont de type classique, par exemple tel que décrit dans WO 2007/085773.

L'installation 10 comprend, d'amont en aval, des moyens 12 de formation de fragments de viande et des moyens de transformation de ces fragments en éléments de viande restructurée. Ces moyens de transformation comportent des moyens 14 de tassement cohésif des fragments de viande, pour former un bloc de fragments de viande tassés, ainsi que d'autres moyens classiques qui sont décrits par exemple dans WO 2007/085773. Les moyens 14 de tassement cohésif sont portés par un bâti 15.

Les moyens 12 de formation de fragments de viande sont de type classique et comprennent des moyens connus en soi de refroidissement et de tranchage de morceaux de viande obtenus par découpage d'animaux.

Dans l'exemple illustré, les moyens 12 forment des fragments de viande (non représentés) tels que chaque fragment ait une forme générale de feuille ayant une surface comprise entre 5 à 10 cm² et une épaisseur comprise entre 3 et 9 dixièmes de mm.

Les fragments de viande sont transportés, à l'aide de moyens classiques, depuis les moyens de formation 12 jusqu'à une ouverture supérieure d'un réceptacle 16 dans lequel les fragments de viande chutent par gravité. Le réceptacle 16, porté par le bâti 15, est délimité notamment par deux parois longitudinales verticales 17 dont une seule est représentée sur la figure 1 pour des raisons de clarté.

Le bâti 15 porte également un support mobile des fragments de viande. Ce support mobile, qui est représenté sur la figure 1 et qui sera décrit plus en détail ultérieurement, est destiné à convoyer les fragments de viande suivant une direction longitudinale D, depuis le réceptacle 16 jusqu'aux moyens 14 de tassement cohésif, pour former un bloc de fragments de viande tassés.

Sur les figures 1, 2 et 4, on a représenté un bloc de fragments de viande tassés en cours de formation, désigné par la référence 18.

Les moyens 14 de tassement cohésif des fragments de viande comprennent des moyens 19 à tapis roulants comportant deux tapis roulants 20, 22 de tassement cohésif des fragments de viande. Les deux tapis de tassement 20, 22 sont disposés l'un au-dessus de l'autre de façon que le tapis inférieur 20 s'étende sensiblement horizontalement et le tapis supérieur 22 soit incliné par rapport au tapis inférieur 20.

Les deux tapis de tassement 20, 22 convergent d'amont en aval par rapport au sens de passage des fragments de viande entre ces tapis 20, 22 de façon à favoriser le tassement cohésif des fragments de viande.

De préférence, les moyens 19 à tapis roulants comportent également deux autres tapis roulants 24, 26 de tassement cohésif des fragments de viande, disposés latéralement à gauche et à droite d'un espace délimité par les deux tapis roulants 20, 22. Les deux tapis roulants latéraux de tassement 24, 26 convergent d'amont en aval par rapport au sens de passage des fragments de viande entre ces tapis 24, 26 de façon à favoriser le tassement cohésif des fragments de viande.

On notera que le tapis inférieur 20 forme le fond du réceptacle 16 et porte les fragments de viande de façon à les transporter depuis ce réceptacle 16 jusqu'à un espace situé entre les quatre tapis roulants de tassement 20, 22, 24, 26, ceci parallèlement à la direction longitudinale de convoyage D. Le support mobile de fragments de viande, évoqué plus haut, est donc formé par le tapis de tassement inférieur 20.

Les moyens 14 de tassement cohésif des fragments de viande comprennent également des moyens 30 à sabots de tassement, disposés en amont des moyens 19 à tapis roulants, ainsi que des moyens de nivellement 32, disposés en amont des moyens 30 à sabots.

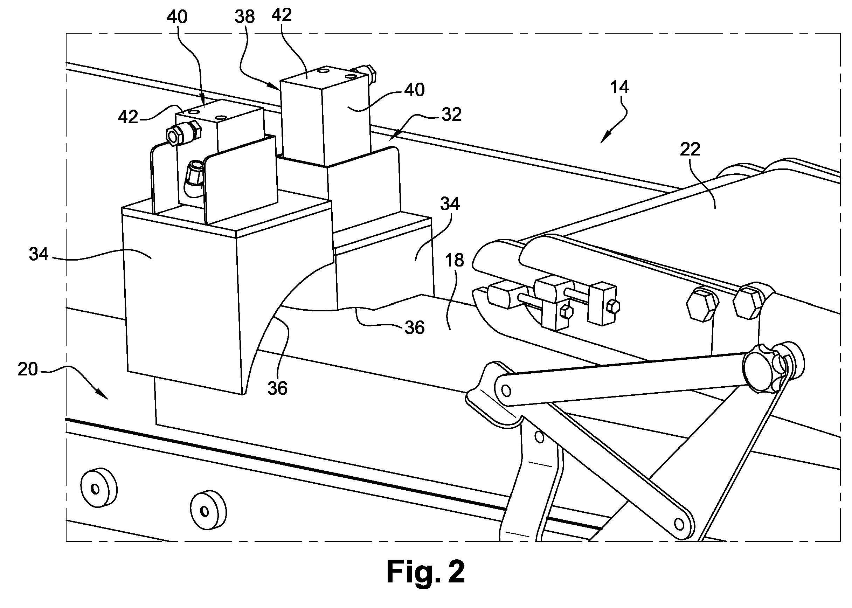

Les moyens 30 à sabots comprennent deux sabots mobiles de tassement 34, représentés plus en détail sur la figure 2, destinés à tasser les fragments de viande entre le tapis roulant inférieur 20 (support mobile) et ces sabots 34.

Les sabots de tassement 34 sont décalés l'un par rapport à l'autre, transversalement par rapport à la direction longitudinale de convoyage des fragments de viande à travers les moyens de tassement cohésif 14.

De préférence, les sabots 34 sont alignés transversalement à la direction longitudinale de convoyage comme cela est représenté sur les figures 1, 2 et 4.

Comme on peut le voir notamment sur la figure 2, chaque sabot 34 à une surface 36 de contact avec les fragments de viande conformée de façon à exercer un tassement dans le sens d'une réduction des dimensions transversales du bloc 18 de fragments de viande tassés en cours de formation. Ainsi, dans l'exemple illustré, la surface 36 de contact avec les fragments de viande est sensiblement curviligne autour d'un axe parallèle à la direction longitudinale de convoyage.

Les sabots de tassement 34 sont entraînés, à l'aide de moyens 38, suivant un mouvement alternatif vertical tel que les sabots 34 se déplacent en déphasage l'un par rapport à l'autre, de préférence en opposition de phase l'un par rapport à l'autre.

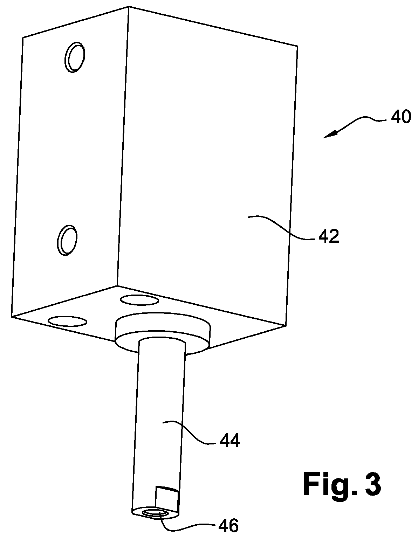

Dans l'exemple illustré, les moyens d'entraînement 38 comprennent deux vérins fluidiques 40, plus particulièrement pneumatiques, sensiblement identiques, reliés respectivement aux sabots de tassement 34. Un vérin 40 est représenté plus en détail sur la figure 3. Chaque vérin 40 comporte un corps fixe 42 dans lequel est montée déplaçable en translation verticale une tige 44. L'extrémité libre 46 de la tige 44 est reliée de façon connue en soi à un sabot correspondant 34.

Les corps 42 des deux vérins 40 sont reliés, de façon connue en soi, à un portique fixe 48, visible sur la figure 1, solidaire du bâti 15.

Les vérins 40 sont pilotés, à l'aide de moyens connus en soi, de façon à assurer les déplacements alternatifs verticaux déphasés des deux sabots de tassement 34.

En variante, les moyens d'entraînement 38 pourraient comporter, à la place des vérins 40, un vilebrequin assurant le mouvement alternatif déphasé des sabots 34.

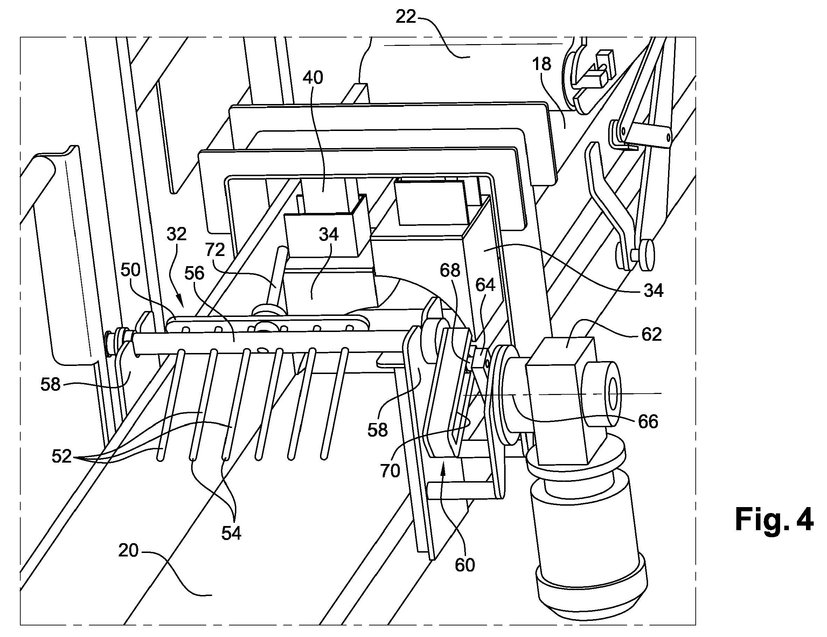

Les moyens de nivellement 32 comprennent un organe de nivellement 50 destiné à coopérer avec le dessus du bloc de fragments de viande tassés en cours de formation. De préférence, l'organe de nivellement 50 à une forme générale de râteau, comme cela est représenté sur les figures 1 et 4, muni de dents 52. Les extrémités libres 54 des dents 52 sont destinées à coopérer avec le dessus du bloc de fragments de viande tassés en cours de formation.

L'organe de nivellement 50 est porté par un arbre 56, d'axe sensiblement transversal à la direction longitudinale de convoyage, monté basculant sur deux flasques 58 solidaires du bâtis 15. L'organe de nivellement 50 est entraîné suivant un mouvement basculant oscillant à l'aide de moyens 60 représentés plus en détail sur la figure 4.

Dans l'exemple illustré, les moyens d'entraînement 60 comprennent un moteur 62 d'entraînement en rotation et des moyens de transformation du mouvement de rotation d'un arbre du moteur en mouvement de basculement de l'organe de nivellement 50.

Les moyens de transformation de mouvement comportent une manivelle 64 munie d'une première extrémité reliée à un arbre 66 (schématisé en traits mixtes sur la figure 4) de rotation du moteur 62 et d'une seconde extrémité reliée à un maneton 68. Ce maneton 68 est destiné à coulisser dans une gorge formant un rail rectiligne 70 solidaire de l'arbre 56 de basculement de l'organe de nivellement 50.

Le rail 70 s'étend sensiblement radialement depuis une extrémité de l'arbre 56 de basculement. L'extrémité du rail la plus proche de l'arbre de basculement 56 est ouverte pour permettre, le cas échéant l'extraction du maneton 68 du rail 70 ou l'engagement du maneton 68 dans le rail 70.

L'organe de nivellement est équilibré autour de l'axe matérialisé par l'arbre de basculement 56, par exemple à l'aide de moyens 72 formant contrepoids des dents 52.

En fonctionnement, le tapis roulant inférieur 20 transporte les fragments de viande depuis le réceptacle 16 jusqu'à travers les moyens 14 de tassement cohésif.

Tout d'abord, l'organe de nivellement 50 provoque, grâce à son mouvement basculant oscillant, un nivellement de la surface supérieure du bloc de fragments de viande tassés en cours de formation.

Puis, les sabots 34 exercent, sous l'effet de leur mouvement alternatif vertical déphasé, un effet de tassement tendant à réduire les dimensions transversales du bloc de fragments de viande tassés en cours de formation.

Enfin, les moyens 19 à tapis roulants parachèvent le tassement du bloc de fragments de viande tassés.

Le bloc de fragments de viande tassés obtenu grâce aux moyens de tassement décrits ci-dessus présente une structure très satisfaisante dans laquelle la masse de viande et convenablement répartie, la forme du bloc de viande étant relativement homogène.

Bien entendu, l'invention ne se limite pas au mode de réalisation décrit ci-dessus. En particulier, les moyens de nivellement 32 pourraient être, le cas échéant, supprimés. Par ailleurs, les moyens 19 à tapis roulants pourraient être remplacés par des paires de sabots de tassement successives, les surfaces des sabots en contact avec les fragments de viande pouvant avoir des profils évolutifs d'amont en aval de l'installation 10.

## Revendications

1. Installation de fabrication d'un élément de viande restructurée, du type comprenant :
- des moyens (12) de formation de fragments de viande, et
- un support mobile (20) des fragments de viande destiné à convoyer ces fragments de viande suivant une direction longitudinale (D), à travers des moyens (14) de tassement cohésif des fragments de viande pour former un bloc (18) de fragments de viande tassés,
**caractérisée en ce que** les moyens (14) de tassement cohésif comprennent :
- deux sabots mobiles (34) de tassement des fragments de viande entre le support mobile (20) et ces sabots (34), les sabots (34) étant décalés l'un par rapport à l'autre transversalement par rapport à la direction longitudinale de convoyage, et
- des moyens (38) d'entraînement des sabots (34) chacun suivant un mouvement alternatif vertical tel que les sabots (34) se déplacent en déphasage l'un par rapport à l'autre.

2. Installation selon la revendication 1, dans laquelle chaque sabot (34) a une surface (36) de contact avec les fragments de viande conformée de façon à exercer un tassement dans le sens d'une réduction des dimensions transversales du bloc (18) de fragments de viande tassés en cours de formation.

3. Installation selon la revendication 2, dans laquelle la surface (36) de contact avec les fragments de viande est sensiblement curviligne autour d'un axe parallèle à la direction longitudinale de convoyage.

4. Installation selon l'une quelconque des revendications précédentes, dans laquelle les sabots (34) sont alignés transversalement à la direction longitudinale de convoyage.

5. Installation selon l'une quelconque des revendications précédentes, dans laquelle les moyens (38) de déplacement alternatif vertical des sabots (34) comprennent des moyens à vérin fluidique, par exemple deux vérins (40) reliés respectivement aux deux sabots de tassement (34).

6. Installation sur l'une quelconque des revendications précédentes, dans laquelle les moyens (14) de tassement cohésif comprennent des moyens (32) de nivellement du bloc de fragments de viande tassés en cours de formation disposés en amont des sabots de tassement (34) par rapport à un sens de passage des fragments de viande à travers les moyens (14) de tassement cohésif des fragments de viande, ces moyens de nivellement (32) comprenant un organe de nivellement, (50) destiné à coopérer avec le dessus du bloc (18) de fragments de viande tassés en cours de formation, et des moyens (60) d'entraînement de l'organe de nivellement suivant un mouvement basculant oscillant.

7. Installation selon la revendication 6, dans laquelle l'organe de nivellement (50) à une forme générale de râteau muni de dents (52) comportant des extrémités libres (54) destinées à coopérer avec le dessus du bloc de fragments de viande tassés en cours de formation.

8. Installation selon la revendication 6 ou 7, dans laquelle les moyens d'entraînement (60) de l'organe de nivellement (50) comprennent un moteur (62) d'entraînement en rotation et des moyens (64, 68, 70) de transformation du mouvement de rotation du moteur (62) en mouvement de basculement de l'organe de nivellement (50), ces moyens de transformation de mouvement comportant une manivelle (64) munie d'une première extrémité reliée à un arbre (66) de rotation du moteur d'entraînement (62) et d'une seconde extrémité reliée à un maneton (68) destiné à coulisser dans un rail rectiligne (70) solidaire d'un arbre (56) de basculement de l'organe de nivellement.

9. Installation selon l'une quelconque des revendications précédentes, dans laquelle le support mobile de fragments de viande comprend un tapis roulant (20).

10. Installation selon la revendication 9, dans laquelle les moyens de tassement cohésif (14) comprennent deux tapis roulants (20, 22) de tassement cohésif des fragments de viande convergeant d'amont en aval par rapport au sens de passage des fragments de viande à travers les moyens (14) de tassement cohésif des fragments de viande, les deux tapis de tassement (20, 22) étant disposés l'un au-dessus de l'autre, le tapis de tassement inférieur (20) étant formé par le support mobile de fragments de viande.

## Patentansprüche

1. Anlage zur Herstellung eines Elements aus restrukturiertem Fleisch, umfassend:
- Mittel (12) zur Bildung von Fleischstücken, und
- einen beweglichen Träger (20) für die Fleischstücke, der dazu bestimmt ist, diese Fleischstücke in eine Längsrichtung (D) durch Mittel (14) zum Verdichten der Fleischstücke zu befördern, um einen Block (18) von verdichteten Fleischstücken zu bilden,
**dadurch gekennzeichnet, dass** die Mittel (14) zum Verdichten umfassen:
- zwei bewegliche Klötze (34) zum Verdichten der Fleischstücke zwischen dem beweglichen Träger (20) und diesen Klötzen (34), wobei die Klötze (34) zueinander quer in Bezug zur Längsförderrichtung versetzt sind, und
- Antriebsmittel (38) der Klötze (34) jeweils in einer vertikalen Wechselbewegung, so dass sich die Klötze (34) phasenversetzt zueinander bewegen.

2. Anlage nach Anspruch 1, bei der jeder Klotz (34) eine Kontaktfläche (36) mit den Fleischstücken hat, die derart ausgebildet ist, dass sie ein Verdichten in Richtung einer Verringerung der Querabmessungen des Blocks (18) von verdichteten Fleischstücken während der Herstellung ausübt.

3. Anlage nach Anspruch 2, bei der die Kontaktfläche (36) mit den Fleischstücken im Wesentlichen um eine Achse parallel zur Längsförderrichtung gebogen ist.

4. Anlage nach einem der vorhergehenden Ansprüche, bei der die Klötze (34) quer zur Längsförderrichtung ausgerichtet sind.

5. Anlage nach einem der vorhergehenden Ansprüche, bei der die Mittel (38) zur vertikalen Wechselbewegung der Klötze (34) Fluidzylindermittel umfassen, beispielsweise zwei Zylinder (40), die jeweils mit den beiden Verdichtungsklötzen (34) verbunden sind.

6. Anlage nach einem der vorhergehenden Ansprüche, bei der die Mittel (14) zum Verdichten Mittel (32) zur Nivellierung des Blocks von verdichteten Fleischstücken während der Herstellung umfassen, die stromaufwärts zu den Verdichtungsklötzen (34) in Bezug zu einer Durchgangsrichtung der Fleischstücke durch die Mittel (14) zum Verdichten der Fleischstücke angeordnet sind, wobei diese Nivellierungsmittel (32) ein Nivellierungselement (50), das dazu bestimmt ist, mit dem oberen Bereich des Blocks (18) von verdichteten Fleischstücken während der Herstellung zusammenzuwirken, und Antriebsmittel (60) des Nivellierungselements in einer Pendelbewegung umfassen.

7. Anlage nach Anspruch 6, bei der das Nivellierungselement (50) eine allgemeine Form eines mit Zähnen (52) versehenen Rechens hat, umfassend freie Enden (54), die dazu bestimmt sind, mit dem oberen Bereich des Blocks von verdichteten Fleischstücken während der Herstellung zusammenzuwirken.

8. Anlage nach Anspruch 6 oder 7, bei der die Antriebsmittel (60) des Nivellierungselements (50) einen Drehantriebsmotor (62) und Mittel (64, 68, 70) zur Umwandlung der Drehbewegung des Motors (62) in eine Schwenkbewegung des Nivellierungselements (50) umfassen, wobei dies Mittel zur Bewegungsumwandlung eine Kurbel (64) umfassen, die mit einem ersten Ende, das mit einer Drehwelle (66) des Antriebsmotors (62) verbunden ist, und mit einem zweiten Ende versehen ist, das mit einem Zapfen (68) verbunden ist, der dazu bestimmt ist, in einer geraden Schiene (70) zu gleiten, die mit einer Schwenkwelle (56) des Nivellierungselements verbunden ist.

9. Anlage nach einem der vorhergehenden Ansprüche, bei der der bewegliche Träger von Fleischstücken ein Förderband (20) umfasst.

10. Anlage nach Anspruch 9, bei der die Mittel (14) zum Verdichten zwei Förderbänder (20, 22) zum Verdichten der Fleischstücke umfassen, die von stromaufwärts nach stromabwärts in Durchgangsrichtung der Fleischstücke durch die Mittel (14) zum Verdichten der Fleischstücke zusammenlaufen, wobei die beiden Förderbänder (20, 22) übereinander angeordnet sind, wobei das untere Verdichtungsband (20) vom beweglichen Träger von Fleischstücken gebildet ist.

## Claims

1. A facility for manufacturing a restructured meat element, of the type comprising:
- means (12) for forming fragments of meat, and
- a moving support (20) for the fragments of meat designed to convey these fragments of meat in a longitudinal direction (D), through means (14) for cohesively tamping the fragments of meat to form a block (18) of tamped fragments of meat,
**characterized in that** the cohesive tamping means (14) comprise:
- two moving shoes (34) for tamping the fragments of meat between the moving support (20) and these shoes (34), the shoes (34) being offset with respect to one another transversely with respect to the longitudinal conveying direction, and
- means (38) for driving the shoes (34), each following an alternating vertical movement such that the shoes (34) move out of phase with respect to one another.

2. The facility as claimed in claim 1, in which each shoe (34) has a contact surface (36) with the fragments of meat, which surface is formed so as to tamp in the direction of a reduction in the transverse dimensions of the block (18) of tamped fragments of meat being formed.

3. The facility as claimed in claim 2, in which the contact surface (36) with the fragments of meat is substantially curved about an axis parallel to the longitudinal conveying direction.

4. The facility as claimed in any one of the preceding claims, in which the shoes (34) are aligned transversely from to the longitudinal conveying direction.

5. The facility as claimed in any one of the preceding claims, in which the means (38) for the alternating vertical movement of the shoes (34) comprise fluid actuator means, for example two actuators (40) respectively connected to the two tamping shoes (34).

6. The facility as claimed in any one of the preceding claims, in which the cohesive tamping means (14) comprise means (32) for leveling the block of tamped fragments of meat being formed, arranged upstream of the tamping shoes (34) with respect to a direction of motion of the fragments of meat through the means (14) for cohesively tamping the fragments of meat, these leveling means (32) comprising a leveling member (50) designed to engage with the upper side of the block (18) of tamped fragments of meat being formed, and means (60) for driving the leveling member following an oscillating rocking motion.

7. The facility as claimed in claim 6, in which the leveling member (50) is in the general shape of a rake equipped with tines (52) comprising free ends (54) designed to engage with the top of the block of tamped fragments of meat being formed.

8. The facility as claimed in claim 6 or 7, in which the means (60) for driving the leveling member (50) comprise a rotary drive motor (62) and means (64, 68, 70) for transforming the rotary motion of the motor (62) into a rocking motion of the leveling member (50), these motion transforming means comprising a crank (64) equipped with a first end connected to a rotary shaft (66) of the drive motor (62) and with a second end connected to a crank pin (68) designed to slide in a straight rail (70) secured to a rocking shaft (56) of the leveling member.

9. The facility as claimed in any one of the preceding claims, in which the moving support for fragments of meat comprises a conveyor belt (20).

10. The facility as claimed in claim 9, in which the cohesive tamping means (14) comprise two conveyor belts (20, 22) for cohesively tamping the fragments of meat converging from upstream to downstream with respect to the motion direction of the fragments of meat through the means (14) for cohesively tamping the fragments of meat, the two tamping belts (20, 22) being arranged one above the other, the lower tamping belt (20) being formed by the moving support for fragments of meat.
